# EUROPÄISCHE PATENTSCHRIFT

(11) **EP 2 092 181 B1**
(45) Veröffentlichungstag und Bekanntmachung des Hinweises auf die Patenterteilung: **26.05.2010**
(21) Anmeldenummer: 07857212.0
(22) Anmeldetag: 14.11.2007
(51) Int. Cl.: F02D 41/14

(54) **VERFAHREN ZUM BETREIBEN EINER BRENNKRAFTMASCHINE**
METHOD FOR OPERATING AN INTERNAL COMBUSTION ENGINE
PROCÉDÉ DE FONCTIONNEMENT D'UN MOTEUR À COMBUSTION INTERNE

(30) Priorität: 15.11.2006 DE 102006053807
(43) Veröffentlichungstag der Anmeldung: 26.08.2009
(73) Patentinhaber: Robert Bosch GmbH, 70442 Stuttgart (DE)
(72) Erfinder: PITZAL, Volker, 73550 Waldstetten/Wissgoldingen (DE); GERWING, Wolfram, 74394 Hessigheim (DE)
(86) Internationale Anmeldenummer: PCT/EP2007/062311
(87) Internationale Veröffentlichungsnummer: WO 2008/058980

(56) Entgegenhaltungen:
- EP-A- 1 045 235
- WO-A-2005/021315
- DE-A1- 10 305 092
- DE-C1- 19 946 962

## Beschreibung

### Stand der Technik

Die Erfindung betrifft ein Verfahren zum Betreiben einer Brennkraftmaschine, insbesondere eines Kraftfahrzeugs, bei dem die Brennkraftmaschine durch mindestens eine Ansteuergröße angesteuert wird, und wobei ein von der Brennkraftmaschine abgegebenes Istdrehmoment aus einer von der Ansteuergröße verschiedenen Betriebsgröße der Brennkraftmaschine ermittelt wird.

Ein derartiges Betriebsverfahren ist bereits aus der auf die Anmelderin zurückgehenden DE 103 04 113 A1 bekannt. Bei diesem bekannten Verfahren ist vorgeschlagen, das Istdrehmoment aus einem Motordrehzahlsignal der Brennkraftmaschine zu ermitteln. Die Betrachtung des Motordrehzahlsignals ermöglicht prinzipiell die Erkennung momentenerhöhender Fehler; d.h. solcher Fehler, die ein unerwünschtes Ansteigen des von der Brennkraftmaschine abgegebenen Istdrehmoments verursachen. Insbesondere können auch außerhalb der Ansteuerung auftretende momentenerhöhende Fehler wie z.B. die unerwünschte Verbrennung von Fremdstoffen usw. erkannt werden. Allerdings ist bei der Auswertung des Motordrehzahlsignals bzw. bei der Ermittlung der Drehzahl der Brennkraftmaschine eine verhältnismäßig lange Messkette gegeben, was sich negativ auf die Genauigkeit der erhaltenen Motordrehzahlwerte und damit auch auf die Ermittlung des Istdrehmoments auswirkt. Die Auswertung des Drucksignals eines Zylinderinnendrucksensors ist ähnlich aufwendig und erfordert darüber hinaus das Vorhandensein mindestens eines derartigen Zylinderinnendrucksensors.

### Offenbarung der Erfindung

Demgemäß ist es Aufgabe der vorliegenden Erfindung, ein Betriebsverfahren für eine Brennkraftmaschine anzugeben, das eine verhältnismäßig einfache Erkennung momentenerhöhender Fehler, insbesondere auch außerhalb der Ansteuerung auftretender momentenerhöhender Fehler, ermöglicht.

Diese Aufgabe wird bei einem Verfahren der eingangs genannten Art erfindungsgemäß dadurch gelöst, dass eine Abgastemperatur der Brennkraftmaschine als von der Ansteuergröße verschiedene Betriebsgröße zur Ermittlung des Istdrehmoments verwendet wird.

### Vorteile der Erfindung

Erfindungsgemäß ist erkannt worden, dass die Abgastemperatur der Brennkraftmaschine unmittelbar korreliert mit einem von der Brennkraftmaschine abgegebenen Istdrehmoment. Dieser Zusammenhang wird durch das erfindungsgemäße Betriebsverfahren vorteilhaft ausgenutzt, um das von der Brennkraftmaschine abgegebene Istdrehmoment zu ermitteln. Ein besonderer Vorteil gegenüber herkömmlichen Verfahren besteht darin, dass eine der Erfassung der Abgastemperatur der Brennkraftmaschine zugrundeliegende Messkette verhältnismäßig kurz ist und demnach eine präzise Ermittlung der Abgastemperatur und damit des Istdrehmoments ermöglicht. Ferner ist im Gegensatz zu den auf der Messung des Zylinderinnendrucks basierenden herkömmlichen Verfahren das Vorsehen eines zusätzlichen Sensors nicht erforderlich, weil zur Ausführung des erfindungsgemäßen Verfahrens ein bereits vorhandener Abgastemperatursensor der Brennkraftmaschine verwendet werden kann.

Eine gesteigerte Präzision bzw. Fehlertoleranz bei der Ermittlung des Istdrehmoments ist dadurch erzielbar, dass neben einer Ermittelung des Istdrehmoments in Abhängigkeit der Abgastemperatur zusätzlich eine Ermittlung des Istdrehmoments der Brennkraftmaschine in Abhängigkeit weiterer, von der Ansteuergröße der Brennkraftmaschine verschiedener, Betriebsgrößen erfolgt.

Die in Abhängigkeit unterschiedlicher, jeweils von der Ansteuergröße der Brennkraftmaschine verschiedener Betriebsgrößen ermittelten Istdrehmomente ermöglichen vorteilhaft eine gegenseitige Plausibilisierung, wodurch eine weitere Steigerung der Präzision bei der Ermittlung des Istdrehmoments erreicht wird.

Um beispielsweise ein unerwünschtes Beschleunigen der Brennkraftmaschine zu erkennen, kann das Istdrehmoment vorteilhaft auf Übereinstimmung mit einem Solldrehmoment überwacht werden.

Sobald eine vorgebbare zulässige Abweichung des Istdrehmoments von dem Solldrehmoment überschritten wird beziehungsweise im Falle einer fehlgeschlagenen Plausibilisierung von Istdrehmomenten, kann erfindungsgemäß vorteilhaft eine Fehlerreaktion eingeleitet werden, die z.B. die Wiederherstellung eines sicheren Betriebszustands der Brennkraftmaschine, insbesondere das Einleiten eines Notlaufs und dergleichen, zum Gegenstand hat.

Ergänzend kann das von der Brennkraftmaschine abgegebene Istdrehmoment auch aus der mindestens einen Ansteuergröße der Brennkraftmaschine ermittelt werden. Ein auf diese Weise erhaltenes Istdrehmoment ermöglicht für sich zwar nicht die Erkennung momentenerhöhender Fehler außerhalb einer Ansteuerung der Brennkraftmaschine, kann jedoch in Verbindung mit dem erfindungsgemäß aus der Abgastemperatur ermittelten Istdrehmoment vorteilhaft für eine Plausibilisierung herangezogen werden.

Sofern die Abgastemperatur mit Hilfe mindestens eines Abgastemperatursensors erfasst wird, wird eine Fehlerreaktion erfindungsgemäß dann eingeleitet, wenn eine Fehlfunktion des Abgastemperatursensors festgestellt wird. Beispielsweise kann eine derartige Fehlerreaktion vorteilhaft auch dann eingeleitet werden, wenn der Abgastemperatursensor ausgebaut wird bzw. sein Fehlen erkannt wird.

Von besonderer Bedeutung ist die Realisierung des erfindungsgemäßen Verfahrens in Form eines Computerprogramms, das auf einem Computer beziehungsweise einer Recheneinheit eines Steuergeräts ablauffähig und zur Ausführung des Verfahrens geeignet ist. Das Computerprogramm kann beispielsweise auf einem elektronischen Speichermedium abgespeichert sein, wobei das Speichermedium seinerseits zum Beispiel in dem Steuergerät enthalten sein kann.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

### Kurze Beschreibung der Zeichnung

In der Zeichnung zeigt:
- Figur 1: ein schematisches Blockschaltbild einer Motorsteuerung,
- Figur 2: ein Funktionsdiagramm einer ersten Ausführungsform des erfindungsgemäßen Betriebsverfahrens, und
- Figur 3: ein Funktionsdiagramm einer weiteren Ausführungsform des erfindungsgemäßen Betriebsverfahrens.

### Ausführungsformen der Erfindung

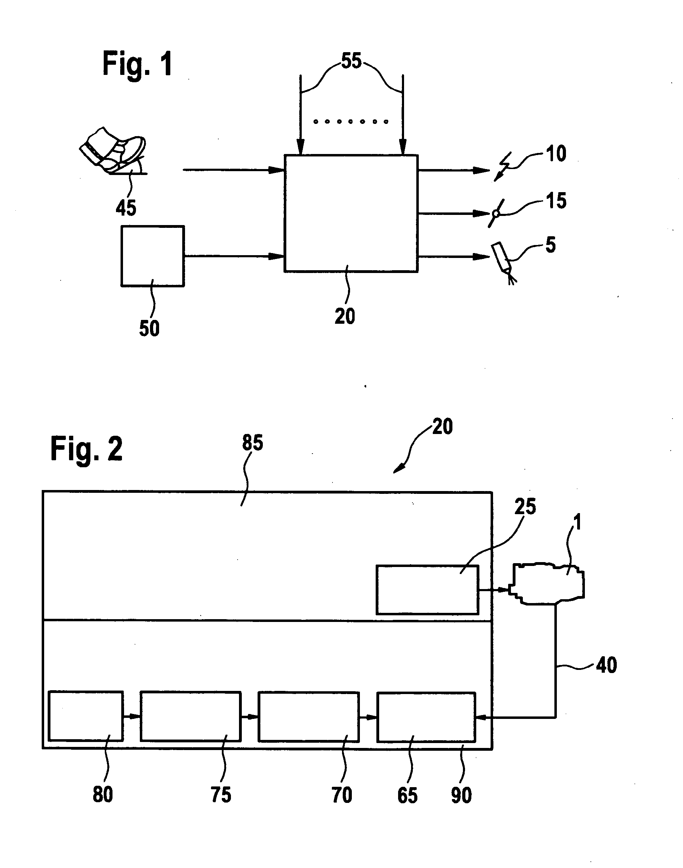

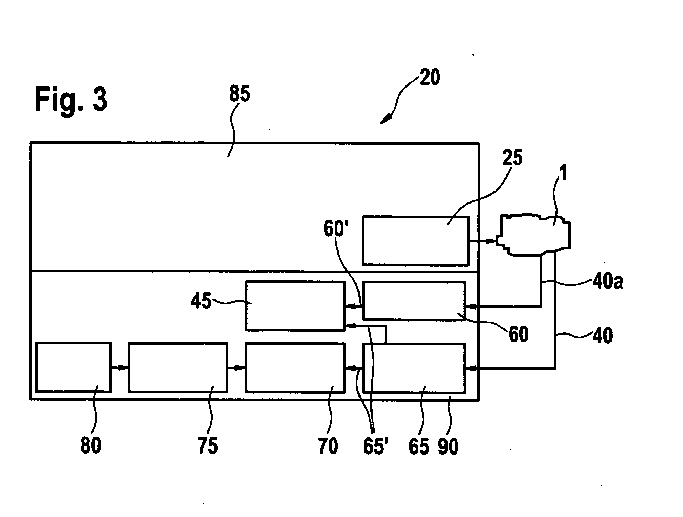

In Figur 1 ist mit dem Bezugszeichen 20 eine Motorsteuerung zur Steuerung einer Brennkraftmaschine 1, die in den Figuren 2 und 3 dargestellt ist, bezeichnet. Die Motorsteuerung 20 kann beispielsweise durch ein nicht abgebildetes Steuergerät der Brennkraftmaschine 1 realisiert sein, das eine Recheneinheit, ein vorzugsweise elektronisches Speichermedium sowie weitere für die Realisierung des erfindungsgemäßen Verfahrens und der restlichen Steuerung der Brennkraftmaschine 1 erforderliche und dem Fachmann bekannte Komponenten aufweist. Die Brennkraftmaschine 1 treibt beispielsweise ein Kraftfahrzeug an.

Der Motorsteuerung 20 ist gemäß Figur 1 ein Fahrerwunschmoment von einem Fahrpedal 45 zugeführt. Ferner können der Motorsteuerung 20, wie in Figur 1 dargestellt, eine oder mehrere externe Momentenanforderungen 50 zugeführt sein. Die externen Momentenanforderungen 50 können beispielweise von externen Fahrzeugfunktionen, wie zum Beispiel einem Antiblockiersystem, einer Antischlupfregelung, einer Fahrgeschwindigkeitsregelung oder dergleichen erzeugt und an die Motorsteuerung 20 weitergeleitet werden. In der Motorsteuerung 20 erfolgt dann in dem Fachmann bekannter Weise eine Momentenkoordination, wobei eine Priorisierung der zugeführten Momentenanforderungen 50 und des Fahrerwunschmoments durchgeführt wird, um ein resultierendes, von der Brennkraftmaschine 1 umzusetzendes Solldrehmoment zu bestimmen.

Die Bestimmung des Solldrehmoments erfolgt in einer ersten Ebene 85 der Motorsteuerung 20, die durch das in Figur 2 abgebildete Funktionsdiagramm beispielhaft wiedergegeben ist. Die auch als Funktionsebene bezeichnete erste Ebene 85 dient zur Realisierung der Gesamtheit der zum Betrieb der Brennkraftmaschine 1 notwendigen Funktionen.

Mittels einer nicht in Figur 2 abgebildeten Solldrehmomentbestimmungseinheit wird das gewünschte Solldrehmoment für die Brennkraftmaschine 1 gebildet. Danach wird das Solldrehmoment einem ebenfalls nicht in Figur 2 abgebildeten Momentenmodell zugeführt und dort in Abhängigkeit von Betriebsgrößen 55 (Figur 1) der Brennkraftmaschine 1 in eine Ansteuerdauer und/oder einen Ansteuerbeginn für mindestens eine Ansteuergröße in ebenfalls dem Fachmann bekannter Weise transformiert. Die entsprechenden Ansteuergrößen sind in Figur 2 durch den Funktionsblock 25 repräsentiert.

Bei den zur Ermittlung der Ansteuergröße(n) herangezogenen Betriebsgrößen 55 (Figur 1) kann es sich beispielsweise um eine Drehzahl der Brennkraftmaschine 1, eine Temperatur der Brennkraftmaschine 1, einen Saugrohrdruck und so weiter handeln. Als mindestens eine Ansteuergröße wird beispielsweise eine Kraftstoffeinspritzung 5, ein Zündwinkel 10 oder auch eine Luftzufuhr 15 gewählt. Im Falle eines Dieselmotors wird in der Regel nur die Kraftstoffeinspritzung 5 als Ansteuergröße gewählt. Insbesondere im Falle eines Ottomotors können eine oder auch mehrere der genannten Ansteuergrößen 5, 10, 15 zur Umsetzung des Solldrehmoments gewählt werden.

Sofern die Kraftstoffeinspritzung 5 als Ansteuergröße verwendet wird, ergibt sich aus einer entsprechenden Ansteuerdauer und dem Ansteuerbeginn eine in den Brennraum der Brennkraftmaschine 1 eingeleitete Kraftstoffmasse, die für die Umsetzung des Solldrehmoments erforderlich ist.

Im Falle des Zündwinkels 10 ergibt sich aus dem Ansteuerbeginn ein Zündwinkel für die Zündung des in dem Brennraum befindlichen Luft-/Kraftstoffgemischs, der für die Umsetzung des Solldrehmoments erforderlich ist.

Im Falle der Luftzufuhr 15 ergibt sich aus der Ansteuerdauer und dem Ansteuerbeginn beispielsweise einer Drosselklappe eine Frischluftfüllung in dem Brennraum, die für die Umsetzung des Solldrehmoments erforderlich ist.

Die Bildung der Ansteuerdauer und des Ansteuerbeginns oder ggf. weiterer Parameter der mindestens einen Ansteuergröße erfolgt in dem bereits beschriebenen Funktionsblock 25 (Figur 2) der Funktionsebene 85 der Motorsteuerung 20 in Abhängigkeit der Vorgabe des nicht abgebildeten, ebenfalls in der Funktionsebene 85 angeordneten Momentenmodells.

In einer zweiten, auch als Überwachungsebene bezeichneten Ebene 90 der Motorsteuerung 20 wird eine Momentenüberwachung durchgeführt, die eine Überwachung des von der Brennkraftmaschine 1 tatsächlich abgegebenen Istdrehmoments zum Gegenstand hat, das sich aufgrund der in der ersten Ebene 85 berechneten Ansteuerdauer und/oder des Ansteuerbeginns der mindestens einen Ansteuergröße einstellt.

Erfindungsgemäß wird in der Überwachungsebene 90 der Motorsteuerung 20 eine Abgastemperatur der Brennkraftmaschine 1 ausgewertet, um hieraus das von der Brennkraftmaschine 1 abgegebene Istdrehmoment zu ermitteln. Hierzu wird das Sensorsignal eines entsprechend z.B. in einem nicht abgebildeten Abgastrakt der Brennkraftmaschine 1 vorgesehenen Abgastemperatursensors einer der Überwachungsebene 90 zugeordneten Istdrehmoment-Ermittlungseinheit 65 zugeführt, was in Figur 2 durch den Pfeil 40 symbolisiert ist. Die Istdrehmoment-Ermittlungseinheit 65 ermittelt aus dem ihr zugeführten Abgastemperatursignal 40 beispielsweise unter Verwendung einer entsprechenden Kennlinie oder von entsprechenden Kennfeldern, die z.B. weitere Betriebsgrößen 55 (Figur 1) der Brennkraftmaschine 1 berücksichtigen können, das tatsächlich von der Brennkraftmaschine 1 abgegebene Istdrehmoment.

Das erfindungsgemäß aus der Abgastemperatur der Brennkraftmaschine 1 ermittelte Istdrehmoment wird einer ebenfalls in der Überwachungsebene 90 der Motorsteuerung 20 angeordneten Momentenvergleichseinheit 70 zugeführt. Die Momentenvergleichseinheit 70 führt einen Vergleich zwischen dem erfindungsgemäß aus der Abgastemperatur ermittelten Istdrehmoment und einem zulässigen Drehmoment durch.

Das zulässige Drehmoment wird in einer ebenfalls in der Überwachungseinheit 90 angeordneten Bestimmungseinheit 75 beispielsweise in Abhängigkeit einer redundanten Signalerfassung 80 gebildet. Das zulässige Drehmoment kann dabei beispielsweise in dem Fachmann bekannter Weise in Abhängigkeit des Fahrerwunsches an dem Fahrpedal 45 ermittelt werden. Die redundante Signalerfassung 80 kann bevorzugt mit Hilfe zweier Sensoren die Fahrpedalstellung des Fahrpedals 45 redundant erfassen.

Sobald das erfindungsgemäß aus der Abgastemperatur der Brennkraftmaschine 1 ermittelte Istdrehmoment das zulässige Drehmoment um einen vorgebbaren Differenzbetrag überschreitet, wird eine Fehlerreaktion ausgelöst. Das beschriebene Verfahren stellt sicher, dass steuergeräteinterne Fehler oder sonstige Fehler in dem Bereich der Motorsteuerung 20, die zu einer unerwünschten Erhöhung der in dem Funktionsblock 25 gebildeten Ansteuergrößen für die Brennkraftmaschine 1 und damit des tatsächlich von der Brennkraftmaschine 1 abgegebenen Istdrehmoments führen, sicher erkannt werden. Auch außerhalb der Motorsteuerung 20 auftretende momentenerhöhende Fehler werden durch das vorstehend beschriebene erfindungsgemäße Verfahren sicher erkannt, weil das zur Momentenüberwachung verwendete Istdrehmoment aus einer Betriebsgröße der Brennkraftmaschine 1-nämlich der Abgastemperatur - gebildet wird, die verschieden ist von der bzw. den verwendeten Ansteuergrößen für die Brennkraftmaschine 1.

Erfindungsgemäß ist erkannt worden, dass die Ermittlung des tatsächlich von der Brennkraftmaschine 1 abgegebenen Istdrehmoments basierend auf der Abgastemperatur der Brennkraftmaschine 1 besonders präzise ist, weil die entsprechende Messkette über den Abgastemperatursensor - z.B. im Vergleich zu einer Auswertung eines Motordrehzahlsignals -verhältnismäßig kurz ist. Mit dem erfindungsgemäßen Verfahren ist es demnach möglich, eine sehr genaue Drehmomentenüberwachung der Brennkraftmaschine 1 in der Überwachungsebene 90 durchzuführen.

Eine ganz besonders zuverlässige Drehmomentenüberwachung kann unter Verwendung einer redundanten Erfassung der Abgastemperatur, z.B. mittels zweier separater Abgastemperatursensoren, erzielt werden.

Eine weitere Ausführungsform des erfindungsgemäßen Verfahrens ist nachfolgend unter Bezugnahme auf das in der Figur 3 abgebildete Funktionsdiagramm beschrieben.

Analog zu der bereits unter Bezugnahme auf Figur 2 beschriebenen Motorsteuerung 20 wird auch in der Motorsteuerung 20 gemäß Figur 3 eine oder mehrere Ansteuergrößen für die Brennkraftmaschine 1 in einem Funktionsblock 25 ermittelt, der in der Funktionsebene 85 der Motorsteuerung 20 angeordnet ist.

Erfindungsgemäß wird bei der in Figur 3 abgebildeten Motorsteuerung 20 das von der Brennkraftmaschine 1 abgegebene Istdrehmoment neben der vorstehend unter Bezugnahme auf Figur 2 beschriebenen Ermittlung aus einer Abgastemperatur 40 der Brennkraftmaschine 1 auch zusätzlich aus mindestens einer weiteren, von der durch den Funktionsblock 25 gebildeten Ansteuergröße verschiedenen Betriebsgröße der Brennkraftmaschine 1 ermittelt. Bei dieser weiteren Betriebsgröße der Brennkraftmaschine 1 kann es sich beispielsweise um eine Drehzahl der Brennkraftmaschine 1 handeln. Ein entsprechendes Drehzahlsignal 40a wird hierzu einer in der Überwachungsebene 90 angeordneten Drehzahlaufbereitungseinheit 60 zugeführt, die aus dem Drehzahlsignal 40a, beispielsweise unter Auswertung insbesondere von Drehzahländerungen, das von der Brennkraftmaschine 1 abgegebene Istdrehmoment 60' berechnet.

Wie bereits unter Bezugnahme auf die in Figur 2 abgebildete Variante der Motorsteuerung 20 beschrieben, wird zusätzlich in dem Funktionsblock 65 das von der Brennkraftmaschine 1 abgegebene Istdrehmoment 65' basierend auf einem Abgastemperatursignal 40 ermittelt. Die entsprechend von den Funktionsblöcken 60, 65 erfindungsgemäß redundant ermittelten Istdrehmomente 60', 65' werden vorteilhaft einer Plausibilisierungseinheit 45 zugeführt, die bei dem in Figur 3 beschriebenen Ausführungsbeispiel in der Überwachungsebene 90 angeordnet ist. Die Plausibilisierungseinheit 45 führt erfindungsgemäß eine Plausibilisierung des in Abhängigkeit der Abgastemperatur der Brennkraftmaschine 1 ermittelten Istdrehmoments 65' mit dem Istdrehmoment 60' durch, das aus einer weiteren Betriebsgröße der Brennkraftmaschine 1 wie vorliegend beispielsweise der Drehzahl der Brennkraftmaschine 1 abgeleitet worden ist.

Sofern die Plausibilisierung in der Plausibilisierungseinheit 45 beispielsweise eine hinreichende Übereinstimmung der beiden ermittelten Istdrehmomente 60', 65' ergibt, wird von einem ordnungsgemäßen Betrieb der Brennkraftmaschine 1 ausgegangen. Ergänzend wird der bereits unter Bezugnahme auf Figur 2 beschriebene Momentenvergleich durch die Momentenvergleichseinheit 70 durchgeführt.

Ein nicht ordnungsgemäßer Betrieb der Brennkraftmaschine 1 kann durch die in Figur 3 abgebildete Variante der Motorsteuerung 20 erstens dadurch erkannt werden, dass der in der Momentenvergleichseinheit 70 durchgeführte Vergleich zwischen dem aus der Abgastemperatur der Brennkraftmaschine 1 ermittelten Istdrehmoment 65' und einem durch den Funktionsblock 75 in der vorstehend beschriebenen Weise gebildeten Solldrehmoment eine zu große Abweichung zwischen dem erfindungsgemäß ermittelten Istdrehmoment 65' und dem Solldrehmoment ergibt.

Zweitens ermöglicht die in Figur 3 abgebildete erfindungsgemäße Motorsteuerung 20 die Erkennung eines nicht ordnungsgemäßen Betriebs der Brennkraftmaschine 1 dann, wenn die Plausibilisierungseinheit 45 eine fehlgeschlagene Plausibilisierung anzeigt. Eine derartige fehlgeschlagene Plausibilisierung in der Plausibilisierungseinheit 45 kann sich beispielsweise dann ergeben, wenn das in Abhängigkeit der Abgastemperatur der Brennkraftmaschine 1 ermittelte Istdrehmoment 65' über ein vorgebbares Maß von dem Istdrehmoment 60' abweicht, dass aus der Drehzahl der Brennkraftmaschine 1 ermittelt worden ist.

Der Momentenvergleich in der Momentenvergleichseinheit 70 kann bei der Motorsteuerung 20 nach Figur 3 auch entfallen, so dass allein die beschriebene Plausibilisierung in dem Funktionsblock 45 stattfindet.

Neben einer Auswertung der Drehzahl der Brennkraftmaschine 1 können auch weitere Betriebsgrößen der Brennkraftmaschine 1 in dem Funktionsblock 60 ausgewertet werden, um einen Istdrehmomentwert 60' zu erhalten, mit dem das erfindungsgemäß aus der Abgastemperatur der Brennkraftmaschine 1 ermittelte Istdrehmoment 65' plausibilisiert werden kann.

Insbesondere ist es bei einer weiteren vorteilhaften Ausführungsform des erfindungsgemäßen Verfahrens auch möglich, neben der Ermittlung des Istdrehmoments 65' aus der Abgastemperatur einen weiteren Istdrehmomentwert 60' aus der mindestens einen Ansteuergröße der Brennkraftmaschine 1 zu ermitteln, die wie beschrieben in dem Funktionsblock 25 gebildet wird. Hierzu wird die betreffende Ansteuergröße von dem Funktionsblock 25 z.B. an den Funktionsblock 60 weitergeleitet. Der Funktionsblock 60 kann demnach den weiteren Istdrehmomentwert 60' entweder aus einer von der Ansteuergröße verschiedenen Betriebsgröße 40a ermitteln oder direkt aus der bzw. den Ansteuergrößen des Funktionsblocks 25.

Im Falle der Ermittlung des weiteren Istdrehmomentwerts 60' aus den Ansteuergrößen kann vorteilhaft ein inverses Momentenmodell eingesetzt werden, das mit dem in der Funktionsebene 85 zur Bildung der Ansteuergrößen in Abhängigkeit des Solldrehmoments verwendeten Momentenmodell korrespondiert.

Es ist ebenfalls vorstellbar, das Istdrehmoment der Brennkraftmaschine 1 aus der Abgastemperatur 40 und aus mindestens einer weiteren von der Ansteuergröße verschiedenen Betriebsgröße 40a sowie aus mindestens einer Ansteuergröße zu ermitteln und entsprechend zur Plausibilisierung und/oder für einen Sollwertvergleich oder eine Kombination hieraus einzusetzen.

Die Ermittlung des Istdrehmoments 65' in Abhängigkeit der Abgastemperatur der Brennkraftmaschine 1 muss nicht notwendig in der Überwachungsebene 90 der Motorsteuerung 20 erfolgen, sondern kann vielmehr auch direkt in der Funktionsebene 85 der Motorsteuerung 20 erfolgen. In diesem Fall kann innerhalb der Überwachungsebene 90 beispielsweise das Istdrehmoment unter Verwendung eines inversen Momentenmodells aus den Ansteuergrößen für die Brennkraftmaschine 1 ermittelt werden.

Besonders vorteilhaft wird bei dem erfindungsgemäßen Betriebsverfahren ein zur Ermittlung des Abgastemperatursignals 40 verwendeter Abgastemperatursensor (nicht gezeigt) auf eine ordnungsgemäße Funktion überwacht, was beispielsweise innerhalb der Überwachungsebene 90 erfolgen kann. Insbesondere ist vorteilhaft vorgesehen, eine Fehlerreaktion einzuleiten, sobald eine Fehlfunktion des Abgastemperatursensors festgestellt wird. Eine derartige Fehlerreaktion kann beispielsweise auch dann eingeleitet werden, wenn das Entfernen des Abgastemperatursensors ermittelt wird.

Eine besonders zuverlässige Variante des erfindungsgemäßen Betriebsverfahrens ist dadurch gegeben, dass die Abgastemperatur der Brennkraftmaschine 1 redundant erfasst wird, beispielsweise unter Verwendung zweier separater Abgastemperatursensoren. In Übereinstimmung mit dem in der Motorsteuerung 20 realisierten Konzept der ersten, das heißt der Funktionsebene 85 und der hiervon getrennten zweiten Ebene, das heißt der Überwachungsebene 90, kann das Signal eines ersten Abgastemperatursensors beispielsweise in der Funktionsebene 85 ausgewertet werden, während die Auswertung des Signals eines zweiten Abgastemperatursensors in der Überwachungsebene 90 erfolgt.

Die in diesem Fall redundant vorliegenden Abgastemperatursignale können wiederum beispielsweise dem Funktionsblock 65 zugeführt werden, der in der bereits beschriebenen Art und Weise ein tatsächlich von der Brennkraftmaschine 1 abgegebenes Istdrehmoment ermittelt.

Das erfindungsgemäße Betriebsverfahren ermöglicht eine Überwachung der Brennkraftmaschine 1, insbesondere auf das Auftreten von momentenerhöhenden Fehlern, wie beispielsweise dem Einbringen von Fremdstoffen, wie zum Beispiel Ölnebel, in einen Brennraum der Brennkraftmaschine. Besonders vorteilhaft ist durch die erfindungsgemäße Ableitung des Istdrehmoments 65' aus einer Abgastemperatur 40 eine Verfahrensweise zur präzisen Ermittlung des tatsächlich von der Brennkraftmaschine 1 abgegebenen Istdrehmoments angegeben, die eine umfassende Plausibilisierung des Istdrehmoments u. a. mit aus weiteren Betriebsgrößen der Brennkraftmaschine 1 ermittelten Werten für das Istdrehmoment ermöglicht.

## Patentansprüche

1. Verfahren zum Betreiben einer Brennkraftmaschine (1), insbesondere eines Kraftfahrzeugs, bei dem die Brennkraftmaschine (1) durch mindestens eine Ansteuergröße angesteuert wird, und wobei ein von der Brennkraftmaschine (1) abgegebenes Istdrehmoment aus einer von der Ansteuergröße verschiedenen Betriebsgröße der Brennkraftmaschine (1) ermittelt wird, **dadurch gekennzeichnet, dass** eine Abgastemperatur der Brennkraftmaschine (1) als von der Ansteuergröße verschiedene Betriebsgröße zur Ermittlung des Istdrehmoments verwendet wird.

2. Verfahren nach Anspruch 1, **dadurch gekennzeichnet, dass** das Istdrehmoment zusätzlich aus mindestens einer weiteren, von der Ansteuergröße verschiedenen Betriebsgröße der Brennkraftmaschine (1) ermittelt wird.

3. Verfahren nach Anspruch 2, **dadurch gekennzeichnet, dass** das aus mindestens einer weiteren Betriebsgröße der Brennkraftmaschine (1) ermittelte Istdrehmoment mit dem in Abhängigkeit der Abgastemperatur ermittelten Istdrehmoment der Brennkraftmaschine (1) plausibilisiert wird.

4. Verfahren nach einem der vorstehenden Ansprüche, **dadurch gekennzeichnet, dass** das Istdrehmoment auf Übereinstimmung mit einem Solldrehmoment überwacht wird.

5. Verfahren nach einem der Ansprüche 3 oder 4, **dadurch gekennzeichnet, dass** bei einer fehlgeschlagenen Plausibilisierung und/oder bei Überschreiten einer vorgebbaren zulässigen Abweichung des Istdrehmoments von dem Solldrehmoment eine Fehlerreaktion eingeleitet wird.

6. Verfahren nach einem der vorstehenden Ansprüche, **dadurch gekennzeichnet, dass** das von der Brennkraftmaschine (1) abgegebene Istdrehmoment zusätzlich aus der mindestens einen Ansteuergröße der Brennkraftmaschine (1) ermittelt wird.

7. Verfahren nach einem der vorstehenden Ansprüche, wobei die Abgastemperatur mit Hilfe mindestens eines Abgastemperatursensors erfasst wird, **dadurch gekennzeichnet, dass** eine Fehlerreaktion eingeleitet wird, sobald eine Fehlfunktion des Abgastemperatursensors festgestellt wird.

8. Verfahren nach einem der vorstehenden Ansprüche, **dadurch gekennzeichnet, dass** die Abgastemperatur unter Verwendung mehrerer Abgastemperatursensoren redundant erfasst wird.

9. Computerprogramm, **dadurch gekennzeichnet, dass** es zur Ausführung des Verfahrens nach einem der vorstehenden Ansprüche programmiert ist.

10. Steuergerät für eine Brennkraftmaschine (1), insbesondere eines Kraftfahrzeugs, **dadurch gekennzeichnet, dass** das Steuergerät zur Ausführung des Verfahrens nach einem der Ansprüche 1 bis 8 ausgebildet ist.

## Claims

1. Method for operating an internal combustion engine (1), in particular of a motor vehicle, in which method the internal combustion engine (1) is controlled by means of at least one control variable, and with an actual torque output by the internal combustion engine (1) being determined from an operational variable, which differs from the control variable, of the internal combustion engine (1), **characterized in that** an exhaust-gas temperature of the internal combustion engine (1) is used as an operational variable, which differs from the control variable, for determining the actual torque.

2. Method according to Claim 1, **characterized in that** the actual torque is additionally determined from at least one further operational variable, which differs from the control variable, of the internal combustion engine (1).

3. Method according to Claim 2, **characterized in that** the actual torque determined from at least one further operational variable of the internal combustion engine (1) is checked for plausibility with the actual torque of the internal combustion engine (1) determined as a function of the exhaust-gas temperature.

4. Method according to one of the preceding claims, **characterized in that** the actual torque is monitored for correspondence with a setpoint torque.

5. Method according to one of Claims 3 or 4,
**characterized in that** a fault reaction is initiated if the check for plausibility fails and/or if a predefinable admissible deviation of the actual torque from the setpoint torque is exceeded.

6. Method according to one of the preceding claims, **characterized in that** the actual torque output by the internal combustion engine (1) is additionally determined from the at least one control variable of the internal combustion engine (1).

7. Method according to one of the preceding claims, with the exhaust-gas temperature being measured by means of at least one exhaust-gas temperature sensor, **characterized in that** a fault reaction is initiated if a malfunction of the exhaust-gas temperature sensor is detected.

8. Method according to one of the preceding claims, **characterized in that** the exhaust-gas temperature is measured redundantly using a plurality of exhaust-gas temperature sensors.

9. Computer program, **characterized in that** it is programmed for carrying out the method according to one of the preceding claims.

10. Control unit for an internal combustion engine (1), in particular of a motor vehicle, **characterized in that** the control unit is designed to carry out the method according to one of Claims 1 to 8.

## Revendications

1. Procédé pour faire fonctionner un moteur à combustion interne (1), notamment d'un véhicule automobile, dans lequel le moteur à combustion interne (1) est commandé par au moins une grandeur de commande, et dans lequel un couple instantané fourni par le moteur à combustion interne (1) est déterminé à partir d'une grandeur de fonctionnement du moteur à combustion interne (1) différente de la grandeur de commande, **caractérisé en ce que** l'on utilise une température de gaz d'échappement du moteur à combustion interne (1) comme grandeur de fonctionnement différente de la grandeur de commande pour déterminer le couple instantané.

2. Procédé selon la revendication 1, **caractérisé en ce que** le couple instantané est déterminé en outre à partir d'une autre grandeur de fonctionnement du moteur à combustion interne (1) différente de la grandeur de commande.

3. Procédé selon la revendication 2, **caractérisé en ce que** le couple instantané déterminé à partir d'au moins une autre grandeur de fonctionnement du moteur à combustion interne (1) subit un examen de plausibilité par comparaison avec le couple instantané du moteur à combustion interne (1) déterminé en fonction de la température des gaz d'échappement.

4. Procédé selon l'une quelconque des revendications précédentes, **caractérisé en ce que** le couple instantané est surveillé de manière à vérifier qu'il coïncide avec un couple de consigne.

5. Procédé selon l'une quelconque des revendications 3 ou 4, **caractérisé en ce que** dans le cas d'un test de plausibilité négatif et/ou dans le cas d'un dépassement d'un écart prédéfinissable admissible du couple instantané du couple de consigne, une réaction d'erreur est initiée.

6. Procédé selon l'une quelconque des revendications précédentes, **caractérisé en ce que** le couple instantané fourni par le moteur à combustion interne (1) est en outre déterminé à partir de l'au moins une grandeur de commande du moteur à combustion interne (1).

7. Procédé selon l'une quelconque des revendications précédentes, dans lequel la température des gaz d'échappement est détectée à l'aide d'au moins un capteur de température de gaz d'échappement, **caractérisé en ce qu'**une réaction d'erreur est initiée dès qu'une fonction d'erreur du capteur de température de gaz d'échappement est constatée.

8. Procédé selon l'une quelconque des revendications précédentes, **caractérisé en ce que** la température des gaz d'échappement est détectée de manière redondante en utilisant plusieurs capteurs de température de gaz d'échappement.

9. Programme informatique, **caractérisé en ce qu'**il est programmé pour mettre en oeuvre le procédé selon l'une quelconque des revendications précédentes.

10. Appareil de commande pour un moteur à combustion interne (1), notamment d'un véhicule automobile, **caractérisé en ce que** l'appareil de commande est réalisé pour mettre en oeuvre un procédé selon l'une quelconque des revendications 1 à 8.
